# EUROPÄISCHE PATENTSCHRIFT

(11) **EP 3 511 470 B1**
(45) Veröffentlichungstag und Bekanntmachung des Hinweises auf die Patenterteilung: **09.09.2020**
(21) Anmeldenummer: 19156680.1
(22) Anmeldetag: 07.07.2015
(51) Int. Cl.: E01H 1/05, E01H 11/00, A46B 13/00, A46B 5/00, A46B 9/02, A46B 13/02, A47L 11/26, A47L 11/40, A01M 21/02

(54) **HANDGEFÜHRTES REINIGUNGS- UND PFLEGEGERÄT**
HAND-OPERATED CLEANING AND CARE DEVICE
DISPOSITIF DE NETTOYAGE ET DE SOIN COMMANDÉ À LA MAIN

(30) Priorität: 16.07.2014 DE 102014010692; 30.04.2015 DE 102015005488
(43) Veröffentlichungstag der Anmeldung: 17.07.2019
(62) Teilanmeldung aus: 15735929.0
(73) Patentinhaber: Kress, Markus, 89075 Ulm (DE)
(72) Erfinder: Kress, Markus, 89075 Ulm (DE)
(74) Vertreter: Sawodny, Michael-Wolfgang

(56) Entgegenhaltungen:
- DE-B3-102008 006 318
- DE-U1- 9 000 712
- DE-U1- 20 321 268
- DE-U1-202004 018 358
- US-A- 2 842 788
- US-A- 4 586 211
- US-B2- 7 257 909
- US-B2- 8 122 554

## Beschreibung

Die Erfindung betrifft ein Reinigungs- und Pflegegerät, insbesondere ein Fugen- und Flächenreinigungs- und pflegegerät, insbesondere ein handgeführtes Reinigungs- und Pflegegerät für Beläge, insbesondere Bodenbeläge, bevorzugt Fliesen-, Stein-, Betonboden oder Holzbodenbeläge, ganz bevorzugt Beläge im Außenbereich, beispielsweise gepflasterte Beläge, Steinplatten, Holzbeläge.

Horizontal gelagerte, rotierende Bürsten werden derzeit bevorzugt in Großreinigungsgeräten eingesetzt, die insbesondere im kommunalen Bereich Verwendung finden. Kleinere, bevorzugt handgeführte Reinigungsgeräte mit rotierenden Bürsten werden für Anwendungen im Haushalt eingesetzt, bevorzugt, um Fußbodenbeläge von Schmutz zu befreien. All diesen Geräten ist gemeinsam, dass sie wie rotierende Besen arbeiten und die Reinigung im Wesentlichen dem Fegen des Fußbodenbelages dient. Mit derartigen handgeführten Reinigungsgeräten oder Großreinigungsgeräten ist allerdings eine Reinigung stark verschmutzter Oberflächen, insbesondere im Außenbereich, bei Gehwegen und Terrassen mit leicht strukturierter Oberfläche nicht möglich. Insbesondere ergeben sich bei der Reinigung von Beton, Naturstein, glatten Fliesenoberflächen und Holzterrassen im Außenbereich Probleme bei der Reinigung der Oberflächen.

Für eine Reinigung oder eine Abtragung von Verunreinigungen wie Schmutz Moos, Algen oder auch Lack auf Oberflächen, z. B. Holz, ist oftmals eine mechanische Bodenbearbeitung erforderlich. Für die Reinigung einzelner Bereiche des Bodens wie z. B. der Fugen oder aber der flächigen Bearbeitung von Bodenflächen ist es notwendig, mit unterschiedlichen Bearbeitungsvorrichtungen oder Reinigungs- und Pflegevorrichtungen die Böden zu bearbeiten oder zu reinigen.

So ist es beispielsweise bekannt, dass zur Reinigung von Fugen eine Fugenbürste eingesetzt werden kann. Die Fugenbürste ist dann allerdings als Einzelgerät ausgebildet, so dass eine flächige Bearbeitung, beispielsweise von Bodenflächen, zu Reinigungszwecken nicht möglich war.

Alternativ zu der Reinigung mit einer Fugenbürste könnte eine Reinigung der Fugen auch mit einem Hochdruckreiniger vorgenommen werden. Dies hat jedoch den Nachteil, dass zum einen durch den hohen Druck Fugen beschädigt werden können, Wasser in die Fugen eindringen kann und Schmutzpartikel wie Unkraut, Flechten durch den hohen Druck aufgewirbelt werden und aus den Fugen herausspritzen.

Hochdruckreiniger sind auch mit einer Abdeckhaube als Terrassenreiniger bekannt. Diese beschädigen zwar die Holzoberfläche nicht, allerdings ist die Reinigungswirkung in den Rillen von Holzdeckprofilen unzureichend. Zudem werden Schmutz, Algen, Schlamm und Verunreinigungen mit dem Spritzwasser in die Fugen nebeneinander liegender Bretter geschwemmt.

Für eine flächige Bearbeitung sind aus dem Stand der Technik rotierende Bürsten bekannt. Diese hatten jedoch den Nachteil einer großflächigen Auflage, die das Eindringen der Borsten in Unebenheiten des Bodens beispielsweise bei Waschbetonböden erschwerte bzw. sogar ganz verhinderte.

Wie zuvor beschrieben, können Wege, Flächen und Terrassen in Haus und Garten auf unterschiedlichste Art gereinigt werden. Hierzu gehört einerseits das Entfernen von Unkräutern aus den Fugen sowie Moos und festsitzender Schmutz auf Oberflächen. Die aus dem Stand der Technik bekannten Bürstenwalzen können nur den oberflächlichen Schmutz zusammenkehren. Weiterhin kommen auch Kehrmaschinen zum Einsatz, die auch mit kreisförmig rotierenden Bürsten mit zur Oberfläche senkrechter Drehachse die Oberfläche reinigen. Bei diesen Systemen ist die Eindringtiefe sehr gering, da die Bürste ganzflächig auf der Oberfläche aufliegt. Fugen können mit solchen Geräten nicht gereinigt werden.

Mit den für die Fugenreinigung bekannten Hochdruckreinigern können zwar Fugen und Oberflächen gleichzeitig bearbeitet werden, allerdings werden die Fugen gänzlich durch den Wasserstrahl ausgewaschen, was bei der Unkrautentfernung nicht erwünscht ist. Weiterhin werden durch den harten Wasserstrahl fest vergossene Fugen teilweise ausgewaschen, so dass sich anschließend Samen in den Fugen festsetzen können. Ein weiterer Nachteil ist die Verunreinigung der Umgebung durch aus den Fugen herausgelöste Schmutzpartikel. Zwar können dagegen auch Abdeckungen eingesetzt werden, jedoch ist dann nicht sichtbar, wie weit der Strahl die Fuge auswäscht. Überdies ist der Wasserverbrauch hoch.

Zum mechanischen Reinigen von Fugen existieren handgeführte Elektrogeräte, die in der Regel mit einem rechtwinklig zu einem Führungsstiel angebrachten Motor und einer schmalen Bürstenscheibe ausgestattet und beispielsweise aus DE 203 21 268 U1 und DE 299 14 790 U1 bekannt sind. Diese Systeme arbeiten allerdings mit einer Drehzahl von ungefähr 3.000 Umdrehungen pro Minute.

Eine weitere einschlägige Schrift ist die DE 603 16 021 T2.

Die mit hoher Drehzahl arbeitenden Systeme haben den Nachteil, dass die Systeme eine schonende Reinigung nicht zulassen.

Aus der WO 2006/056313 A ist ein elektrisch betriebenes Gartengerät bekannt geworden, das vorwiegend zum Reinigen der Fugen zwischen verlegten Platten, zum Reinigen der Platten selbst sowie zum Vertikutieren verwendet wird. Das in der WO 2006/056313 A gezeigte Gerät umfasst mindestens einen Vertikutieraufsatz sowie ein Bürstenrad, das vornehmlich zur Fugenreinigung eingesetzt wird. Vertikutieraufsatz und Bürstenrad sind auf eine Welle aufgeschraubt und können getauscht werden. Eine Bürste, insbesondere eine Walzenbürste mit rotierenden Bürsten, ist in der WO 2006/056313 A nicht gezeigt. auch fehlt in der WO 2006/056313 A jedweder Hinweis, wie Bodenflächen, beispielsweise Wege und Terrassen, gereinigt werden können.

Die DE 90 00 712 U1 offenbart eine Unkrautfräse zum Reinigen von Fugen. Die aus der DE 90 00 712 U1 bekannte Unkrautfräse ist ein handgeführtes Reinigungsgerät mit einer quergelagerten schmalen Drahtbürste, die in die vom Unkraut zu reinigenden Fugen eingreift. Die quergelagerte schmale Drahtbürste wird von einem an der Führungsstange befestigten Motor angetrieben. Eine Tauschbarkeit oder eine Walzenbürste ist in der DE 90 00 712 U1 nicht gezeigt.

Die DE 10 2008 006 318 B3 beschreibt eine Fugenreinigungsmaschine für gepflasterte Flächen mit einem Gehäuse und einem an der Achse befindlichen Laufrad. Des Weiteren umfasst die Maschine einen Elektromotor mit einer Welle für den Antrieb einer Bürstenscheibe sowie einen dem Gehäuse zugeordneten Holm mit einem Handgriff. Die Welle des Elektromotors ist in Richtung der senkrechten Ebene quer zur Fahrrichtung der Maschine derart schräg angeordnet, dass die an der Welle befestigte Bürstenscheibe eine bestimmte Schräglage zu den Fugen der Pflasterung aufweisen kann. Der Elektromotor ist in Richtung der senkrechten Ebene am Gehäuse beweglich gelagert. In der DE 10 2008 006 318 B3 - ebenfalls nicht gezeigt - ist eine Walzenbürste zum Reinigen von Flächen. Die DE 195 05 156 A1 beschreibt ein handgeführte motorisiertes Universalgerät, das insbesondere für die Bodenbearbeitung, das Laub- und Schneekehren im Bereich der Garten- und Grundstückpflege geeignet ist. Es besteht aus einem mit Verbrennungs- oder Elektromotor und mit Handgriffen ausgerüsteten Stiel oder einem Holm, der an seinem unteren Ende ein Getriebe trägt, das mit auswechselbaren, um ihre horizontale Achse rotierenden Arbeitswerkzeugen, insbesondere mit Fräswerkzeugen und mit rotierenden Besen, ausgerüstet werden kann. Der für die verschiedenen Arbeitsvorgänge erforderliche unterschiedliche Drehsinn der Arbeitswerkzeuge wird durch Umschwenken des Stiels oder durch Drehen des Stiels oder des Getriebes um einen Winkel von 180° um die Stielachse erreicht.

Der aus der DE 195 05 156 A1 bekannt gewordene Besen ist aber nicht mit einer Walzenbürste vergleichbar, da er zwar losen Schmutz von einer Bodenfläche entfernen, diese jedoch nicht reinigen kann. Insbesondere ist es mit einem Besen nicht möglich, beispielsweise Moos und Algen von Holzböden zu entfernen.

Ferner wird noch auf das Reinigungsgerät aus der US 8 122 554 B2 verwiesen.

Eine erste Aufgabe ist es somit, eine Bürste zur Verfügung zu stellen, die insbesondere bei Einsatz in einem Reinigungs- und/oder Pflegegerät eine ausreichende Reinigung stark verschmutzter Oberflächen, insbesondere im Außenbereich, ermöglicht.

Dies wird durch eine Walzenbürste erreicht, die einen rotationssymmetrischen Zylinder mit einer Zylinderoberfläche aufweist, wobei auf der Zylinderoberfläche wenigstens eine erste Vielzahl erster Borstenbündel mit ersten Borsten und eine zweite Vielzahl zweiter Borstenbündel mit zweiten Borsten angeordnet sind und erste und zweite Borsten sich voneinander unterscheiden.

In einer bevorzugten Ausgestaltung kann die Unterscheidung dadurch erfolgen, dass das erste Borstenbündel andere Borsten als das zweite Borstenbündel aufweist. In einer fortgebildeten Ausführungsform kann vorgesehen sein, dass die Durchmesser von erstem Borstenbündel und zweitem Borstenbündel unterschiedlich sind. Alternativ oder gleichzeitig wäre es möglich, dass erste und zweite Borsten aus unterschiedlichen Materialien bestehen. Beispielsweise könnten die ersten Borsten aus einem Metall, z. B. Stahldraht und die zweiten Borsten aus einem Kunststoff, beispielsweise Polyamid oder Nylondraht bestehen. Alternativ oder gleichzeitig wäre es möglich, dass die Borsten unterschiedliche Borstenstärken aufweisen.

Besonders bevorzugt ist es, wenn Borstenbündel unterschiedliche Längen aufweisen, d.h. eine erste Länge für das erste Borstenbündel und eine zweite Länge für das zweite Borstenbündel, wobei bevorzugt die erste Länge kürzer als die zweite Länge ist.

Insbesondere liegt der Unterschied zwischen erster und zweiter Länge im Bereich zwischen 50 bis 98 %, bevorzugt 50 bis 90 %. Auf der Walzenoberfläche sind bevorzugt erste und zweite Borstenbündel im Wechsel nebeneinander liegend über die Walzenoberfläche verteilt angeordnet. Besonders bevorzugt ist es, wenn die Borstenbündel versetzt angeordnet sind, bevorzugt diagonal in Pfeilform über die Oberfläche verteilt.

Eine Behandlung der Oberfläche mit der Flächenbürste erfolgt ohne ein Stützrad oder Stützräder. Der Bediener bestimmt mit seiner eingebrachten Kraft und dem Eigengewicht des Gerätes den Anpressdruck der Walze auf die Oberfläche. Aus diesem Grund sind nachfolgend beschriebene Maßnahmen für die Laufruhe der Bürstenwalze erforderlich.

Die diagonale Anordnung von langen Borsten bewirkt einen gleichmäßigen Kontakt der langen Borsten mit der zu reinigenden Oberfläche im Betrieb. Hierdurch wird der Polygon-Effekt nahezu vermieden, welcher sich durch ein radiales Schwingen der Bürste bei wechselndem Kontakt der nachfolgenden Borstenbündel mit der zu behandelnden Fläche einstellen kann. Die diagonale Anordnung der langen Borstenbündel führt dazu, dass eine Axialkraftkomponente die Bürste seitlich laufen lässt. Um dies zu vermeiden, sind die diagonalen langen Borsten spiegelsymmetrisch zur Mitte der Walze angeordnet. Das Ergebnis dieser kombinierten Anordnung ist ein spurtreues Arbeiten mit deutlich reduzierten Schwingungen für den Bediener.

Entscheidend für das Vermeiden des Polygon-Effektes ist, dass die Borsten diagonal in Pfeilform auf der Oberfläche angeordnet sind. Die diagonale Anordnung sorgt für ständiges Anliegen der Borsten auf der Oberfläche. Allerdings ist ein Geradeauslauf aufgrund der auftretenden Querkräfte nicht mehr gewährleistet. Dies kann durch eine pfeilförmige Anordnung vermieden werden. Für verschiedenartige Böden ist es bevorzugt, wenn die Borsten unterschiedliche Durchmesser bzw. Borstenstärken aufweisen. Bevorzugt ist der Durchmesser der Borsten im Bereich zwischen 0,2 bis 1 mm. Bei einer Holzanwendung beträgt der Borstendurchmesser ungefähr 0,4 bis 0,6 mm. Weiche Borsten sind für empfindliche Oberflächen und leichte Reinigungswirkung ausgelegt, harte Borsten reinigen intensiver widerstandsfähige Oberflächen. Die Borsten können auch unterschiedliche Längen aufweisen, müssen dies aber nicht. So kann die Länge der ersten Borsten, der sogenannten kurzen Borsten, im Bereich 15 mm bis 25 mm, bevorzugt bei 20mm, liegen. Die Länge der zweiten Borsten, der sogenannten langen Borsten, kann im Bereich 20 mm bis 30 mm, bevorzugt bei 25 mm, liegen.

Der Durchmesser von Walzenkörper und Borsten, der sogenannte Walzendurchmesser, beträgt im Bereich, in dem die kurzen Borsten eingesetzt werden, 70 bis 120 mm, bevorzugt 90 mm und im Bereich, in dem die langen Borsten eingesetzt werden, 80 bis 130 mm, bevorzugt 100 mm. Als Materialien für die Borsten können sämtliche Kunststoffmaterialien eingesetzt werden wie insbesondere Polyamid, Polypropylen, aber auch Metalle, insbesondere Stahldraht, beschichtet und unbeschichtet, sowie Edelstahldraht und Messingdraht.

Erfindungsgemäß wird ein Reinigungs- und Pflegegerät mit derartiger Walzenbürste zur Verfügung gestellt. Das Reinigungsgerät zeichnet sich dadurch aus, dass es einen Antrieb umfasst, zum Antrieb der Bürstenwalze mit 200 bis 3000 U/min, bevorzugt 600 bis 1400 U/min. Ganz bevorzugt liegt die Drehzahl im Bereich 1000 bis 1200 U/min.

Der Antrieb der Walzenbürste in einem Reinigungs- und/oder Pflegegerät kann auf unterschiedliche Art und Weise erfolgen. Bei einer ersten Ausgestaltung der Erfindung erfolgt der Antrieb der Bürste axial über eine formschlüssige Verbindung, beispielsweise mit einer Innensechskant-Wellenverbindung. Bei der Innensechskant-Wellenverbindung wird das Drehmoment des Motors über eine am Bearbeitungsgerät herausragende Sechskantwelle auf die Bürstenwalze übertragen. Die Bürstenwalze mit dem Innensechskant wird hierfür nur auf die Welle gesteckt. Alternativ ist es möglich, die Walzenbürste auch über ein Zahnrad anzutreiben, das außen an der Welle montiert ist.

Ein Nachteil des axialen Antriebs ist darin zu sehen, dass randnahe Bereiche nicht gereinigt werden können. Um dies zu gewährleisten, kann in einer fortgebildeten Ausführungsform vorgesehen sein, dass seitliche Bürstenkopfaufsätze für die Walzenbürste vorgesehen sind. Diese können bevorzugt beidseitig mit der Walzenbürste formschlüssig verbunden werden, beispielsweise eingeschraubt werden. Mit derartigen Bürstenaufsätzen ist es möglich, auch randnahe Bereiche zu reinigen. Des Weiteren kann vorgesehen sein, die Walzenbürste zu segmentieren und einzelne Segmente mit unterschiedlichen Borstenarten zu bestücken. Die Segmente können dann bevorzugt formschlüssig auf eine Welle aufgeschoben werden.

Die Aufgabe der Erfindung ist es, ein Reinigungs- und Pflegegerät, insbesondere einen Fugen- und Flächenreiniger zur Verfügung zu stellen, der die Nachteile des Standes der Technik vermeidet, insbesondere leicht herzustellen ist sowie platzsparend aufbewahrt werden kann und eine Vielzahl von Einsatzmöglichkeiten umfasst.

Diese Aufgabe wird durch ein Reinigungs- und Pflegegerät gemäß Anspruch 1 gelöst.

Unter einem handgeführten Gerät wird in vorliegender Anmeldung ein Gerät verstanden, bei dem keine fest vorgegebene Achse zur zu bearbeitenden Fläche, insbesondere Bodenfläche vorgegeben ist, sondern diese in gewissen Bereichen frei gewählt werden kann. Erfindungsgemäß umfasst das Reinigungs- und Pflegegerät eine erste und eine zweite Bearbeitungsvorrichtung, die derart ausgebildet sind, dass sie austauschbar von der gleichen Antriebswelle des Elektromotors antreibbar sind.

Während die Walzenbürste parallel zum Motor und symmetrisch zum Führungsholm angebracht ist, um eine gleichmäßige Krafteinleitung durch den Bediener auf die gesamte Walzenbreite zu gewährleisten, ist die Fugenbürste auf der Motorachse außermittig zum Führungsholm positioniert. Auf der gegenüberliegenden Seite der Fugenbürste sorgt ein Laufrad für die stabile Lage der Achse. Die Fugenbürste arbeitet überwiegend mit dem Eigengewicht des Gerätes. Vorteil dieser Anordnung für die Fugenreinigung ist der niedrige Schwerpunkt des Gerätes, wodurch komfortables Arbeiten durch den Bediener nahezu vibrationsfrei ermöglicht wird.

Bevorzugt ist die Bearbeitungsvorrichtung derart ausgestaltet, dass ein werkzeugloser Tausch oder Wechsel von erster und zweiter Bearbeitungsvorrichtung möglich ist.

Bevorzugt erfolgt der werkzeuglose Wechsel am Einsatzort des Fugen- und Flächenreinigungsgerätes. Dies ist besonders bevorzugt, wenn der Einsatzort im Außenbereich ist. Besonders bevorzugt ist es, wenn der werkzeuglose Wechsel ohne Hilfsmittel durch bloßes Verriegeln oder Verrasten und Entriegeln oder Entrasten erfolgt. Die Verrastung kann bevorzugt mit einem Schieber, der am Motorgehäuse angebracht ist, erfolgen.

Erfindungsgemäß ist in dem Motorgehäuse nicht nur der Elektromotor selbst untergebracht, sondern auch ein an den Elektromotor anschließendes Getriebe. Das Getriebe untersetzt die Drehzahl der Antriebswelle des Elektromotors von beispielsweise ungefähr 16.000 U/min mittels eines Innenzahnradgetriebes auf ungefähr 1600 Umdrehungen pro Minute auf die Abtriebswelle des Getriebes. In einem solchen Fall wird die erste und/oder die zweite Bearbeitungsvorrichtung austauschbar über die Abtriebswelle des Getriebes an die Antriebswelle des Elektromotors angeschlossen.

Erfindungsgemäß ist die erste Bearbeitungsvorrichtung eine Scheibe in Form einer Fugenbürste. Die Scheibe ist axial zur Motorwelle und unsymmetrisch zur Führungsholmachse angeordnet. Die Scheibe hat eine Breite im Bereich 1 mm bis 20 mm, bevorzugt 10 mm bis 16 mm und stimmt im Wesentlichen mit der Breite der Fugen bei einem Boden, z.B. einer im Außenbereich gepflasterten Fläche überein.

Erfindungsgemäß ist die zweite Bearbeitungsvorrichtung eine Walze, insbesondere in Form einer Walzenbürste mit einer Bürstenoberfläche. Die Walze ist parallel zur Motorwelle angeordnet und symmetrisch zur Führungsholmebene. Besonders bevorzugt kann die Walzenbürste, wie zuvor beschrieben, mit wenigstens zwei unterschiedlichen Borstenbündeln ausgestaltet sein.

Erfindungsgemäß ist es sehr einfach möglich, unterschiedliche Bearbeitungsvorrichtungen gegeneinander zu tauschen, z. B. die Fugenbürste gegen eine flächig wirkende Walzenbürste wie zuvor beschrieben. Unterschiedliche Bearbeitungsvorrichtungen können dann gleiche Ressourcen wie Elektromotor, Getriebe, Stiel mit Handgriff etc., nutzen. Hierdurch kann ein Anwender eine Vielzahl von Reinigungs- und Pflegegeräten einfach durch bevorzugt werkzeuglosen Austausch von unterschiedlichen Bearbeitungsvorrichtungen nutzen, ohne verschiedenartige Komplettgeräte vorhalten zu müssen.

Besonders bevorzugt ist es, wenn die Walzenvorrichtung mit der Antriebswelle oder der Abtriebswelle des Getriebes des Elektromotors nicht direkt verbunden ist sondern mittels eines Zahnriemenantriebes verbindbar ist.

Durch den Zahnriemenantrieb ist es möglich, die zweite Bearbeitungsvorrichtung, d.h. die Walzenbürste zentral anzuordnen aufgrund der erforderlichen höher einzuleitenden Druckkräfte durch den Bediener. Besonders bevorzugt ist dann eine parallele Anordnung der Bürstenachse zur Motorachse. Der Zahnriemenantrieb hat gegenüber einem Getriebeantrieb den Vorteil, geräuscharmer zu laufen und Schwingungen durch die Bürste auf den Motor zu dämpfen.

Um mit der Walzenbürste unterschiedliche Oberflächenbeschaffenheiten und Qualitäten der zu behandelnden Fläche reinigen und pflegen zu können, wie Gehwegplatten mit flachen Strukturen, grobe Gehwegplatten (Waschbetonplatten) Pflastersteine, Fliesen und verschiedenartige Holzoberflächen, werden unterschiedliche Walzenbürsten mit unterschiedlichen Bürstenqualitäten und/oder unterschiedlichen Bürstenlängen eingesetzt. Hartnäckiger Schmutz auf groben Oberflächenstrukturen kann beispielsweise am besten mit harten Borsten und empfindliche Holzoberflächen mit weichen Borsten bearbeitet werden. Hierbei werden Bürsten mit Borsten und einer Borstenstärke im Bereich von 0,4 bis 1 mm Durchmesser eingesetzt, vorzugsweise in 0,1 mm Sprüngen.

Neben der Reinigung kann die Erfindung eines Reinigungsgerätes mit einer Walzenbürste auch zur Pflege von Oberflächen eingesetzt werden. Für Holzdecks werden zum Beispiel Pflegeöle angeboten, die mit einer weichen Bürste gleichmäßig auf dem Holz verteilt werden können.

Mit der Walzenbürste kann auch eine Nassreinigung und -pflege vorgenommen werden. Insbesondere lassen sich vorher mit Wasser oder Reinigungsmittel benetzte Oberflächen bei hartnäckigem Schmutz besser reinigen als bei trockener Behandlung.

Die Arbeitsdrehrichtung sowohl der ersten Bearbeitungsvorrichtung, d. h. der Fugenbürste wie der zweiten Bearbeitungsvorrichtung, d. h. der Walzenbürste ist jeweils in Zugrichtung, d. h. die Bürste würde den Bediener in Fahrtrichtung ziehen. Die Erfindung verfügt bevorzugt auch über eine Drehrichtungsumkehr. Somit erfolgt Druck auf den Bediener und die Kraft auf die Bürste erhöht sich deutlich. Auf diese Weise kann hartnäckiger Schmutz oder Algenbewuchs noch besser entfernt werden. Ein weiterer Effekt ist, dass der gelöste Schmutz in die Richtung des Bedieners gefördert wird.

Besonders bevorzugt ist es, wenn die zweite Bearbeitungsvorrichtung neben dem Zahnriemenantrieb, der über die Abtriebswelle des Getriebes an die Antriebswelle des Elektromotors anschließt, auf der gegenüberliegenden Seite eine Lagereinrichtung umfasst. Diese Lagereinrichtung ist bevorzugt in ihrer Dicke dünner ausgebildet als die Übersetzungsvorrichtung und ermöglicht so, dass mit der Walzenvorrichtung auch in Kantenbereichen, d. h. randnah, gereinigt werden kann.

Erfindungsgemäß ist zur Handführung des Reinigungs- und Pflegegerätes ein Stiel vorgesehen. Insbesondere ist in einer vorteilhaften Ausführungsform der Erfindung des Reinigungs- und Pflegegerätes dieses im Wesentlichen senkrecht zu einer ebenen, zu bearbeitenden Bodenfläche angeordnet. Insbesondere zeichnet sich das erfindungsgemäße Gerät dadurch aus, dass es einen Stiel zur Handführung aufweist.

Die Handführung des Reinigungs- und Pflegegerätes erlaubt ein dichtes Heranführen auch an schwer zugängliche Kanten und Ecken und damit eine randnahe Reinigung.

Bevorzugt ist der Stiel des Reinigungs- und Pflegegerätes als Metallrohr ausgebildet, das starr mit dem Motorgehäuse verbunden ist. Das Motorgehäuse ist vorzugsweise in der Mitte des Reinigungs- und Pflegegerätes im Winkel von 90° zum Metallrohr angeordnet. Eine mittige Anordnung hat den Vorteil, dass eine gleichmäßige Krafteinleitung durch den Bediener auf die gesamte Walzenbreite erreicht wird ohne dass die Walze zur Seite kippt.

Bevorzugt können als Elektromotor ein Universalmotor bei Netzbetrieb und ein Permanent-Gleichstrom-Motor bei Akkumulator-Betrieb verwandt werden.

Diese Motoren haben gegenüber Asynchronmotoren ein wesentlich geringeres Gewicht.

Bevorzugt weist das Reinigungs- und Pflegegerät zur besseren Führung einen am Stiel angeordneten Handgriff auf.

Das Reinigungs- und Pflegegerät kann entweder mit Netzspannung von 230 Volt betrieben werden oder netzunabhängig mit Hilfe von Speichereinrichtungen, insbesondere Akkumulatoren. Bevorzugt befindet sich der Netzanschluss an dem Ende des Stiels, an dem der Handgriff angeordnet ist. Alternativ ist es möglich, im Handgriff selbst Akkumulatoren unterzubringen, beispielsweise bei Versorgung mit einer Spannung von 12 Volt, 18 Volt, 24 Volt oder 36 Volt anzuschließen.

Um das erfindungsgemäße Reinigungs- und Pflegegerät besonders platzsparend transportieren zu können, ist der Stiel bevorzugt teleskopierbar ausgeführt. Der teleskopierbare Stil hat darüber hinaus den Vorteil, dass die unterschiedlichen Arbeitshöhen für unterschiedliche Arbeitseinrichtungen eingestellt werden können.

Um eine aktive Belüftung des Motors zu ermöglichen, verfügt das Motorgehäuse über Lüftungsschlitze zum Ansaugen von Kühlluft sowie zum Ausblasen von verbrauchter Luft auf der gegenüberliegenden Seite. Auf diese Art und Weise wird eine Überhitzung des Motors verhindert.

Um zu verhindern, dass das Bedienpersonal beim Einsatz des handgeführten Reinigungs- und Pflegegerätes durch aufgewirbelte Fremdkörper verschmutzt wird, kann in einer weitergebildeten Ausführungsform eine Schutzhaube vorgesehen sein, die bevorzugt im Bereich der Walzenbürste angeordnet ist. Bevorzugt ist die Schutzhaube der Walzenbürste in fünf verschiedenen Stufen zu arretieren, so dass mit dem Gerät in verschiedenen Winkeln gearbeitet werden kann.

Nachfolgend soll die Erfindung anhand der Figuren beschrieben werden, ohne hierauf beschränkt zu sein.

Es zeigen:
- Fig. 1: eine Walzenbürste, eingesetzt zur Reinigung eines Holzbodens in dreidimensionaler Ansicht;
- Fig. 2: eine Schnittansicht einer Walzenbürste zur Reinigung eines Holzbodens;
- Fig. 3a-b: eine Draufsicht auf eine Walzenbürste;
- Fig. 4a-c: eine einteilige Walzenbürste mit seitlich angeordneten Bürstenaufsätzen;
- Fig. 5a-b: eine segmentierte Walzenbürste mit Bürstenaufsätzen.
- Fig. 6a: eine Seitenaussicht eines Reinigungs- und Pflegegerätes mit einer Fugenbürste als Bodenbearbeitungsvorrichtung;
- Fig. 6b: eine Seitenansicht des Reinigungs- und Pflegegerätes mit einer Walzenbürste als Bodenbearbeitungsvorrichtung;
- Fig. 7a-b: eine Ansicht des Reinigungs- und Pflegegerätes im Bereich des Elektromotors (Fig. 7a) oder Walzenbürste (Fig. 7b);
- Fig. 7c: eine Ansicht des Reinigungs- und Pflegegerätes, aufgeschnitten von vorne mit Fugenbürste;
- Fig. 7d: eine Ansicht des Reinigungs- und Pflegegeräte, aufgeschnitten von vorne mit Walzenbürste;
- Fig. 8a-8b: eine Detailansicht der Fugenbürste;
- Fig. 9: eine Detailansicht eines Teils der Walzenbürste.

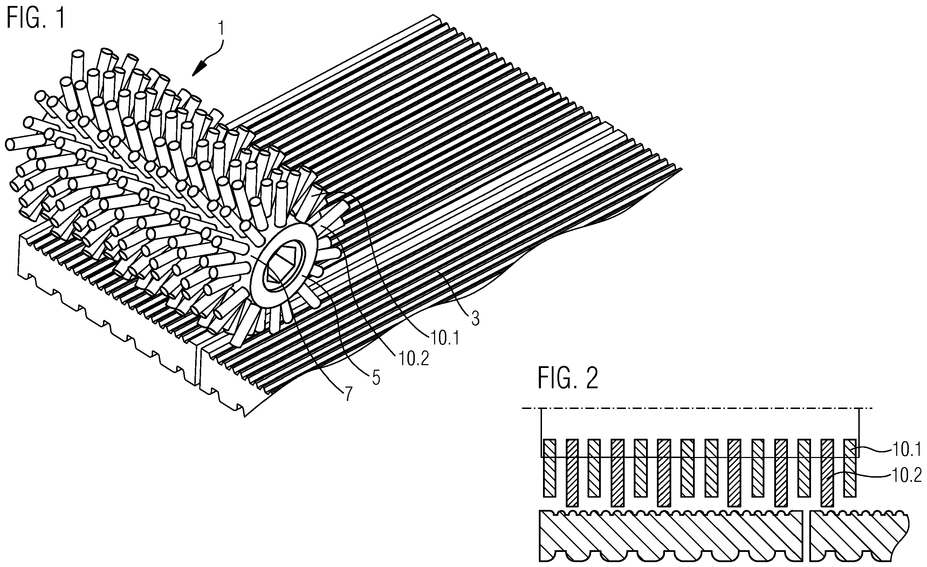

In Figur 1 ist eine Walzenbürste dargestellt, die zur Reinigung einer Holzoberfläche 3 eingesetzt wird. Die Walzenbürste 1 umfasst einen rotationssymmetrischen Zylinder 5 mit einer Zylinderoberfläche 7, in die eine Vielzahl von Borstenbündeln eingesetzt sind. Bei dem in Figur 1 dargestellten Beispiel werden in die Oberfläche zwei Arten von Borstenbündeln eingesetzt, ein erstes Borstenbündel 10.1 sowie ein zweites Borstenbündel 10.2. Die Borstenbündel umfassen eine Vielzahl von Borsten, wobei die einzelnen Borsten einen Durchmesser von 0,2 bis 1 mm aufweisen können. Insbesondere für die Reinigung von Holzoberflächen in Form von längsprofilierten Brettern, wie in Figur 1 dargestellt, umfasst die Walzenbürste erste Borstenbündel mit ersten Borsten. Die ersten Borsten 10.1 sind kurze Borsten mit Durchmessern im Bereich von 0,5 bis 1 mm, insbesondere einem Durchmesser von 0,6 mm. Die zweiten Borsten sind lange Borsten mit einem Durchmesser im Bereich 0,2 bis 0,8 mm, bevorzugt einem Durchmesser von 0,4 mm. Der Walzendurchmesser des mit kurzen Borsten versehenen Bereichs liegt bevorzugt im Bereich 70 bis 120 mm, bevorzugt bei 90 mm und der Walzendurchmesser des mit langen Borsten versehenen Bereichs liegt bei 80 bis 130 mm, bevorzugt bei 100 mm.

Die Länge der kurzen Borsten liegt beispielsweise bei 20 mm, die der langen Borsten bei 25 mm, d.h. die Länge der kurzen Borsten beträgt ungefähr 80 % der Länge der langen Borsten. Generell liegt die Länge der Borsten im Bereich 15 bis 30 mm.

Die unterschiedlich langen Borsten kann man insbesondere aus Figur 2 entnehmen. Hier sind die langen Borsten mit einem Durchmesser von 0,4 mm mit 10.2 bezeichnet und die kurzen Borsten mit einem Durchmesser im Bereich von 0,6 mm mit 10.1.

Bevorzugt sind alle Borsten aus dem gleichen Material hergestellt, beispielsweise aus einem Kunststoffmaterial, bevorzugt Polyamid.

Durch den Einsatz von längeren Borstenbündeln mit dünneren Borsten und kürzeren Borstenbündeln mit dickeren Borsten, wie in den Figuren 1 und 2 dargestellt, ergibt sich der nachfolgend beschriebene Reinigungseffekt, wenn die Borstenbündel abwechselnd gleichmäßig über der Oberfläche der Bürstenwalze verteilt sind. So berühren die weichen Borsten, d.h. die längeren Borstenbündel mit dünneren Borsten zunächst den Boden und reinigen diesen sanft. Bei hartnäckigem Schmutz kann dann ein höherer Druck auf die Walzenbürste ausgeübt werden. Dies führt dazu, dass die Borsten nachgeben und die härten, kürzeren Borsten in Kontakt mit der Oberfläche kommen und festsitzende Schmutzreste entfernen, die mit den weichen ersten Borsten nicht beseitigt werden konnten.

Bevorzugt wird die Walzenbürste in einem handgeführten Reinigungsgerät eingesetzt, das über einen Elektromotor als Antrieb verfügt und die Walzenbürste mit einer Umdrehungszahl von 600 bis 1400 U/min antreibt. Bevorzugt ist die Drehzahl im Bereich 1000 bis 1200 U/min. Mit Hilfe der Walzenbürste ist es möglich, auf Holzoberflächen, beispielsweise Holzdecks, insbesondere Dreck, Moos und Algen, die sich im Laufe der Zeit in den Poren, vorzugsweise in den profilierten Rillen der Bretter ansammeln, nach feuchter

Vorbehandlung mit Wasser, Seifenlauge, Entgrauer oder Algenentferner mit einer Borstengeometrie, wie beschrieben, hervorragend zu entfernen.

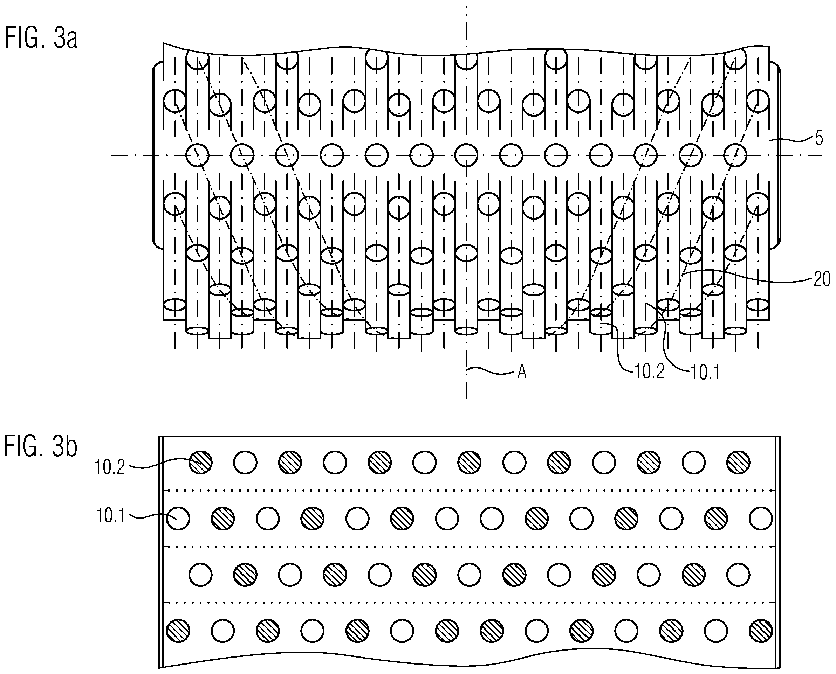

Figur 3a und 3b zeigen eine Draufsicht auf eine Walzenoberfläche mit zwei unterschiedlichen Borstenbündeln. Figur 3a ist eine dreidimensionale Ansicht. Gleiche Bauteile wie in den Figuren 1 und 2 werden mit denselben Bezugsziffern belegt. Die unterschiedlichen Bürsten werden wiederum mit den Bezugsziffern 10.1 und 10.2 belegt. Wie Figur 3a zu entnehmen ist, sind gleiche Borsten entlang einer Linie 20 auf dem Walzenkörper in diagonaler Richtung angeordnet. Die Abwicklung der Oberfläche gemäß Figur 3b zeigt die Anordnung der unterschiedlichen Bürstenarten in einem regelmäßigen Aufbau, wobei die Bürsten in Diagonalen in Pfeilform über die Oberfläche angeordnet sind. Bevorzugt hat die Walzenbürste einen Außendurchmesser zwischen 80 und 120 mm, ganz bevorzugt von 100 mm. Die Breite der Walzenbürstenauflagefläche liegt zwischen 120 und 300 mm, besonders bevorzugt bei 165 mm.

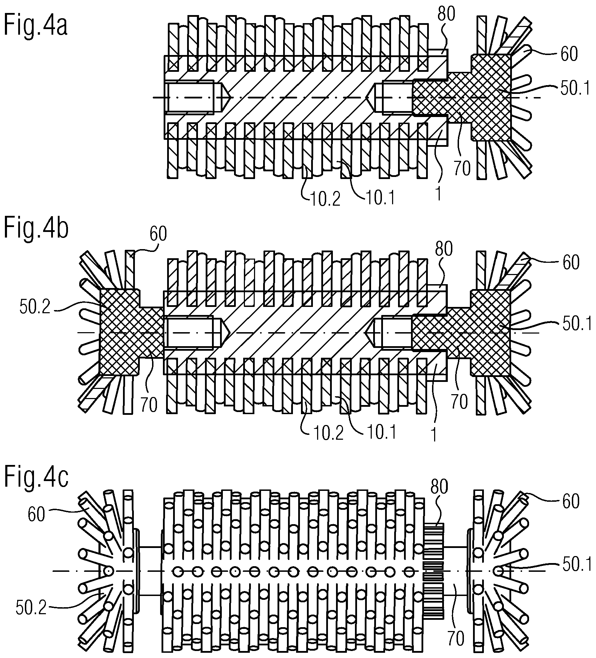

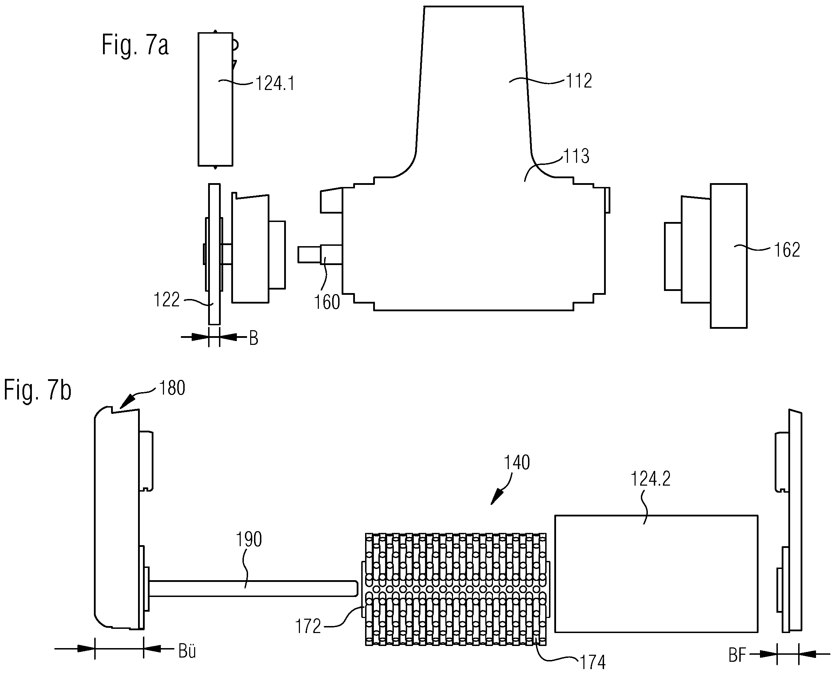

In den Figuren 4a bis 4c ist die Ausgestaltung der Walzenbürste mit an den Seiten angesetzten Bürstenaufsätzen 50.1, 50.2 gezeigt, die einzeln oder beidseitig mit der Bürstenwalze formschlüssig verbunden werden, beispielsweise durch eine Schraubverbindung. Die Bürstenaufsätze 50.1, 50.2 haben außenwinklig angestellte Borstenbündel 60, so dass randnahe Bereiche komplett von der Bürste erfasst werden können. Ein Wellenabsatz 70 zwischen der Walzenbürste 1 und den jeweiligen Aufsätzen 50.1, 50.2 gewährleisten die Lagerung der Bürste. Der Antrieb kann bei einem Beispiel gemäß Figur 4a bis 4c durch ein Zahnrad oder eine Riemenscheibe 80, die mit der Walzenbürste fest verbunden ist, erfolgen. Ein axialer Antrieb wie in Fig. 7b dargestellt kann nur bei einem einseitigen Bürstenaufsatz erfolgen.

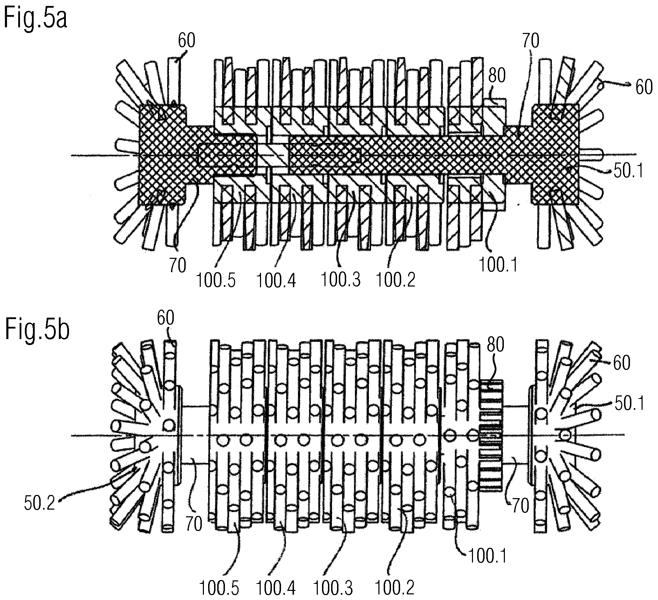

In den Figuren 5a bis 5b ist ein alternatives Beispiel der Walzenbürste gezeigt. Bei diesem Beispiel ist die komplette Walzenbürste in einzelne Segmente 100.1, 100.2, 100.3, 100.4, 100.5 eingeteilt. Wie bei der Ausgestaltung gemäß den Figuren 4a bis 4c sind wiederum Borstenaufsätze vorgesehen. Die einzelnen Segmente 100.1, 100.2, 100.3, 100.4, 100.5 können mit unterschiedlichen Borstenbündeln ausgestaltet sein. Die Borstenbündel der jeweiligen Segmente unterscheiden sich im dargestellten Bespiel in ihrer Materialwahl. So sind die Borsten der Segmente 100.1, 100.3, 100.5 beispielsweise Borsten aus Stahldraht und die Borsten der Borstenbündel in den Segmenten 100.2, 100.4 aus Nylondraht. Eine derartige Durchmischung vergrößert die Reinigungskraft für die zu behandelnde Fläche. Wie schon in den Figuren 4a bis 4c, erfolgt der Antrieb der Walzenbürste über ein Zahnrad oder eine Riemenscheibe.

Nachfolgend sollen vier Versuche der Reinigung mit einer Vorrichtung beschrieben werden. Bei dem Gerät handelt es sich um eine Walzenbürste mit einem rotationssymmetrischen Zylinder, der auf seiner Zylinderoberfläche zwei unterschiedliche Borsten aufweist, erste Borsten und zweite Borsten. Die ersten und zweiten Borsten sind aus Polyamid ausgebildet und weisen die nachfolgenden Abmaße auf:

| | |
|---|---|
| Erste, kurze Borsten: | Durchmesser 0,6 mm, Länge 20 mm |
| Zweite, lange Borsten: | Durchmesser 0,4 mm, Länge 25 mm |

### Versuch 1: Balkonbelag Thermoholz

Der Test wurde an einem 2004 verlegten Balkonbelag aus Thermoholz (TMT) Fichte durchgeführt. Die Dielenbretter sind geriffelt, die Fläche beträgt 1,1 x 2,6 m². Der Balkon ist westexponiert und direkt bewittert. Der Belag war im Frühjahr 2014 letztmalig durch Abschrubben und Wischen mit Seifenlauge gereinigt worden. 2013 war der Belag mit dem Holzöl eingepflegt worden. Dies stellt einen typischen Fall dar, indem die Fläche einmal jährlich im Spätwinter/Frühling vor der Garten- bzw. Balkonsaison gereinigt wird. Die Fläche war nicht durch Algen- oder Schimmelbefall verfärbt, es waren übliche, städtische Staub- und Schmutzablagerungen vorhanden.

Zunächst wurde eine Trockenreinigung durchgeführt. Der Schmutzbelag konnte teilweise entfernt werden; Staub- bzw. Schmutzpartikel wurden nicht nennenswert aufgewirbelt oder weggeschleudert. Der Reinigungseffekt war allerdings gering. Anschließend wurden Terrassendielen mit einem Wischmopp satt befeuchtet und nach 2 min Einwirkzeit mit der Vorrichtung gebürstet.

Der Reinigungseffekt war deutlich stärker. Es traten keinerlei Beschädigungen der Oberfläche auf. Zwei oder drei Reinigungen pro Jahr mit der Vorrichtung stellen keine unzulässige Beanspruchung dar.

### Versuch 2: Terrassendielen Thermoholz Fichte

Terrassendielen aus TMT Fichte, geriffelt und seit 6 Jahren im Gebrauch, wurden im feuchten Zustand (nach Regen) ohne gezielte Befeuchtung gereinigt. Die gereinigten Bereiche trockneten danach rasch ab, wogegen die verschmutzten noch deutlich länger feucht blieben.

Die Reinigungswirkung wurde als gut eingeschätzt.

### Versuch 3: WPC-Riffeldiele

Es wurde eine Testfläche von 1,0 x 0,5 m², bestehend aus 3 WPC-Dielenabschnitten, gereinigt. Die Dielen sind genutet und gebürstet mittelbraun eingefärbt, Matrix PP, 70 % Holzanteil. Die Testfläche war 4 Jahre mit 45'° Neigung und nordexponiert,

Die Reinigung erfolgte trocken sowie nass mit Algenentferner. Das Reinigungsmittel wurde satt mit einem Pinsel aufgetragen und die Fläche nach ca. 1 Stunde Einwirkzeit erneut damit befeuchtet.

Bereits mit der Trockenreinigung zeigten sich sehr gute Effekte, und mit der Nassreinigung mit Algenentferner wirkte die Fläche quasi wie neu. Auch die Rillen wurden sehr gut gereinigt.

### Versuch 4: Terrassendielen Testfläche, verschiedene Hölzer

Die Bürste wurde an verschiedenen Belaghölzern einer Versuchsfläche getestet:

| Diele Nr. | Material | Diele Nr. | Material |
|---|---|---|---|
| 477 | Bangkirai unbehandelt | 495 | KDI Fichte |
| 480 | Bangkirai geölt | 498 | Lärche unbehandelt |
| 483 | Esche TMT unbehandelt | 501 | Lärche geölt |
| 486 | Esche TMT geölt | 504 | Douglasie unbehandelt |
| 489 | Eiche unbehandelt | 507 | Douglasie geölt |
| 492 | Eiche geölt | 510 | Moso Bamboo (compressed) |

Je Materialvariante waren 3 Dielenabschnitte von 700 mm Länge und 130 mm Breite verlegt; es wurde jeweils ein Abschnitt gereinigt, und zwar auf je 1/3 der Länge trocken sowie mit reinem Wasser und spülmittelhaltigem Wasser angefeuchtet; Einwirkzeit ca. 2 min.

Die Reinigungswirkung war analog Versuch 1, d.h. trocken mit geringer, feucht mit guter Wirkung; die Spülmittelzugabe (1 Spritzer auf 5 I) erbrachte auf einigen Materialien eine Verbesserung, die jedoch erst nach Abtrocknung sichtbar wurde.

Im Unterschied zu allen Holzvarianten, die nach Reinigung und Abtrocknung deutlich heller erschienen, zeigte sich der Bambus dunkler, offenbar durch eine geglättete Oberfläche.

Zusammenfassend lässt sich feststellen, dass die erfindungsgemäße Vorrichtung an verschiedenen Belagsmaterialien aus Holz und WPC getestet wurde. Alle Materialien befinden sich seit mehreren Jahren in der Freibewitterung und stellen damit sehr gut die Situation in der Praxis dar. Die Hölzer waren verwittert und mit holzverfärbenden Pilzen bewachsen; das WPC war mit Algen bewachsen. Während die Reinigungseffekte auf allen getesteten Hölzern bei trockener Reinigung sehr gering sind, ist sie bei nasser Reinigung sehr gut. Es wurde keine Schädigung der Holzoberflächen festgestellt.

Bei algenbewachsenem WPC ergab bereits eine trockene Reinigung gute Effekte; diese wurden bei feuchter Reinigung und Vorbehandlung mit einem Algenentferner noch deutlich verbessert.

Eine unzulässige Schädigung der Oberflächen wurde selbst bei empfindlicherem Material wie kesseldruckimprägniertem bzw. thermisch modifiziertem Fichtenholz nicht beobachtet. Ein gewisser Abrieb an der Oberfläche ist aber normal und zum Erzielen des Reinigungseffektes notwendig.

Wie gezeigt, können die rotierenden Walzenbürsten aufgrund der Härte der Borsten harte Fußbodenbeläge von starken Verunreinigungen befreien. Die harten Borsten haben im Wesentlichen die Funktion eines Schrubbers im Gegensatz zu bisherigen Systemen, die eher die Kehrfunktion eines Besens hatten. Mit der Walzenbürste können neben Steinterrassen und Gehwegplatten im Außenbereich auch Fliesen- und Natursteinoberflächen, beispielsweise Granit, behandelt werden. Insbesondere ist es möglich, glatte und strukturierte Holzoberflächen, insbesondere Holzterrassen im Außenbereich, porentief von Moos und Algenrückständen zu befreien. Die gleichmäßige Verteilung unterschiedlich langer oder unterschiedlich harter Borstenbündel auf der Walzenoberfläche führt zu einer zweistufigen Reinigungswirkung.

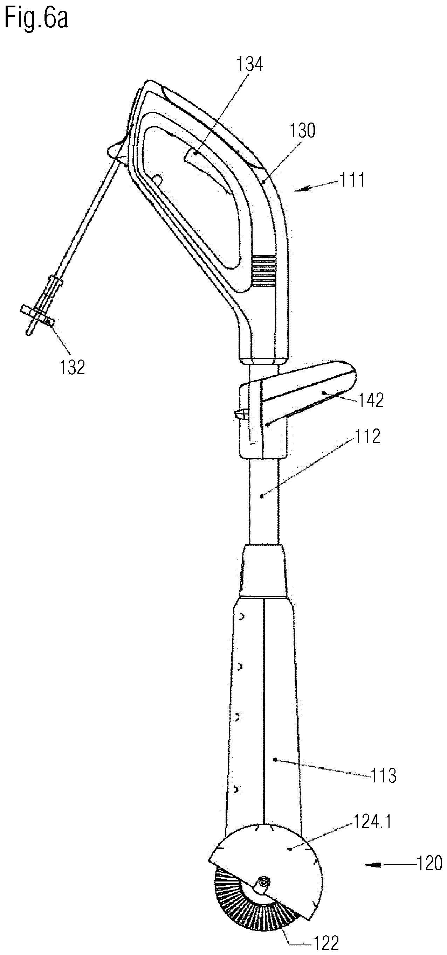

Figur 6a ist eine Seitenansicht eines Reinigungs- und Pflegegerätes gemäß der Erfindung.

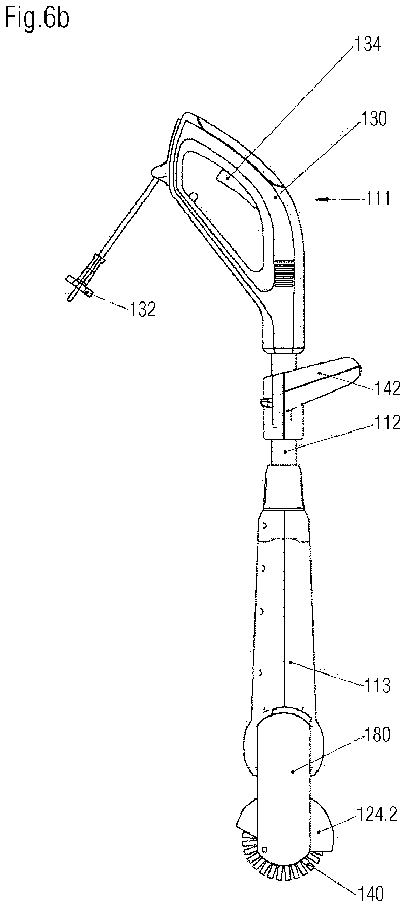

In Figur 6a und 6b sind Reinigungs- und Pflegegeräte mit einer Fugenbürste (Figur 6a) und einer Walzenbürste (Figur 6b) dargestellt. Das Reinigungs- und Pflegegerät besteht im Wesentlichen aus einem Stiel 112, einem Motorgehäuse 113 mit darin untergebrachtem Motor und Getriebe, der bzw. das vorliegend nicht dargestellt ist, zum Antreiben der jeweiligen Bearbeitungsvorrichtung. Erfindungsgemäß ist das Reinigungs- und Pflegegerät 111 handgeführt, wozu der Stiel 112 dient. Bevorzugt ist der Stiel 112 als Metallrohr ausgeführt, wobei das Metallrohr mit dem Motorgehäuse 113 verbunden ist, beispielsweise teleskopierbar.

Figur 6a zeigt eine Seitenansicht, bei der deutlich als erste Bearbeitungsvorrichtung 120 eine Fugenscheibe 122 zu erkennen ist, die vom im Motorgehäuse 113 untergebrachten Elektromotor angetrieben wird. Gut zu erkennen auch die Abdeckhaube 124.1, die den Bediener vor aufgewirbelten Schmutzpartikeln schützt.

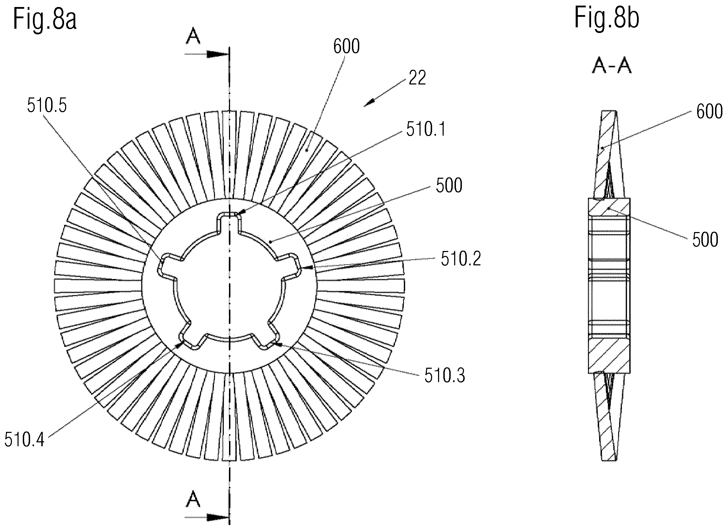

Die Fugenscheibe 122, die auch als Fugenbürste bezeichnet wird, ist detailliert in den Figuren 8a und 8b gezeigt.

An dem Motorgehäuse 113 am gegenüberliegenden Ende des Stiels 112 ist bevorzugt ein Handgriff 130 angeordnet. Der Handgriff 130 weist in dem vorliegend dargestellten Ausführungsbeispiel einen Stecker 132 auf, der als Netzanschluss dient. Um das Reinigungs- und Pflegegerät in und außer Betrieb zu setzen, ist am Handgriff ein Ein/Ausschalter 134 angeordnet. Vom am Handgriff angeordneten Netzanschluss 132 sowie Motorgehäuse 113 angeordneten Elektromotor, der bevorzugt als Universalmotor ausgeführt ist, führt eine im Stiel 112 verlegte Kabelverbindung.

An der Unterseite des Motorgehäuses 113 können Lüftungsschlitze (nicht gezeigt) angeordnet sein. Luft kann durch diese Lüftungsschlitze angesaugt und durch gegenüberliegende Lüftungsschlitze abgegeben werden, so dass der im Gehäuse 113 untergebrachte Motor gekühlt wird.

Anstelle des dargestellten Netzanschlusses kann auch ein Akkumulator, z. B. für 12 Volt, 18 Volt, 24 Volt oder 36 Volt Netzspannung vorgesehen sein. Diese Varianten sind aber vorliegend nicht dargestellt.

Optional kann am Stiel 112 noch ein zusätzlicher Handgriff 142, der auch abnehmbar ausgeführt sein kann zur besseren Führung angeordnet sein.

Durch Einschalten am Ein/Ausschalter 134 wird der Motor und das daran angeschlossene Getriebe und damit die Bearbeitungsvorrichtung in Rotation versetzt. Dabei wird gemäß dem dargestellten Ausführungsbeispiel die Drehbewegung von einem Elektromotor, der in dem Motorgehäuse 113 untergebracht ist, auf eine Motorwelle übertragen, dann an das daran anschließende Getriebe und von der Abtriebswelle des Getriebes auf die jeweilige Bearbeitungsvorrichtung, vorliegend die Fugenbürste oder die Walzenbürste.

In Figur 6b ist eine andere Variante eines Reinigungs- und Pflegegerätes gezeigt, die dadurch erhalten wird, dass das Grundgerät, das den Stiel 112, das Motorgehäuse 113 mit darin untergebrachtem Elektromotor und Getriebe sowie den Handgriff 130 umfasst, nunmehr eine Walze ein in Form einer Walzenbürste 140 antreibt. Der Antrieb erfolgt mit demselben Elektromotor und Getriebe wie in Figur 6a der Antrieb der Fugenbürste 122 erfolgte. Die Walzenbürste kann, muss aber nicht eine Walzenbürste gemäß Figuren 1 bis 5b sein. Walzenbürsten gemäß Figur 1 bis 5b sind vorteilhaft, da sie eine besonders gute Reinigung von Bodenflächen zulassen.

Die Fugenbürste 122 in Form einer Scheibe, insbesondere einer Drahtscheibe, gemäß Figur 6a ist auf gleicher Achslinie wie die Motor- und Getriebewelle angeordnet. Die Fugenbürste ist somit außermittig zum Führungsrohr angeordnet.

Zwar wäre eine außermittige Anordnung auch der Walzenbürste möglich, dies hätte jedoch den Nachteil, dass die relativ breit ausgebildete Walzenbürste zum Taumeln neigt und die Handhabung erschwert.

Daher wird die zweite Bearbeitungsvorrichtung in Form einer Walzenbürste wie in Fig. 6b gezeigt mittig bzw. zentral angeordnet. Die Bürstenachse ist dann parallel zur Motorachse gewählt, was höher einzuleitende Druckkräfte erlaubt. Der Antrieb der Walzenbürste erfolgt dann über einen Riementrieb, hier speziell eine Zahnriemenvorrichtung 80. Der Zahnriemen in der Zahnriemenvorrichtung hat gegenüber einem Getriebe den Vorteil, geräuscharm zu laufen und Schwingungen durch die Walzenbürste auf den Motor zu dämpfen. Der Umbau von der in Figur 6a dargestellten Bearbeitungsvorrichtung mit einer Fugenbürste 122 auf die in Figur 6b dargestellte Bearbeitungsvorrichtung mit einer Walzenbürste 140, erfolgt durch einfachen Austausch der jeweiligen Bearbeitungsvorrichtung 122, 140, die nach Tausch mit ein und derselben Antriebswelle des Elektromotors über das daran anschließende Getriebe verbunden werden. Bevorzugt erfolgt der Tausch werkzeuglos durch einfaches Ein- und Ausstecken der jeweiligen Bearbeitungsvorrichtung auf der Getriebeabtriebswelle, die mit dem Elektromotor verbunden ist. Zur Sicherung sind Verriegelungs- und Entriegelungsvorrichtungen vorgesehen.

Gleiche Bauteile wie in Figur 6a in Figur 6b sind mit denselben Bezugsziffern versehen.

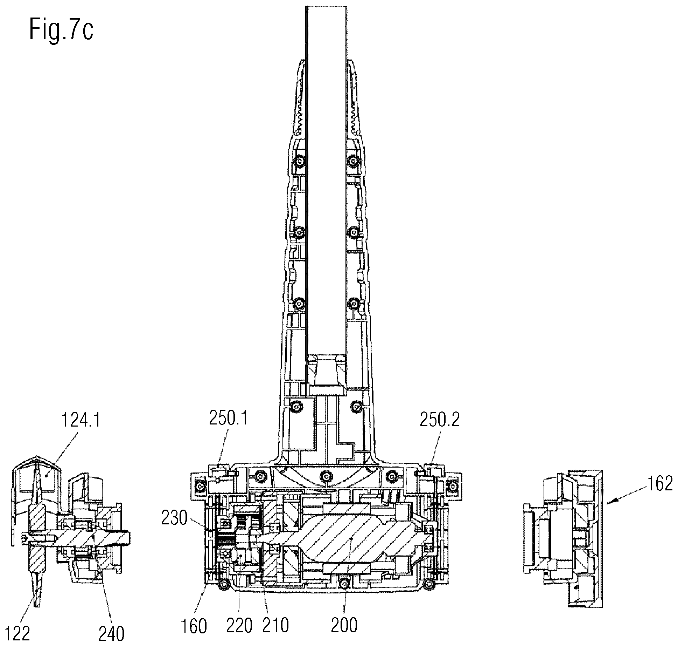

In Figur 7a ist zunächst der Teil des handgeführten Reinigungs- und Pflegegerätes gezeigt, der für beide Varianten, die in Figur 6a und 6b und Figur 7a und 7b dargestellt sind, gleich ist. Dies ist der Stiel 112 mit daran anschließendem Motorgehäuse 113, in dem der Elektromotor und das Getriebe (nicht gezeigt) untergebracht ist. In den Figuren 7a und 7b ist das Gehäuse geschlossen dargestellt. Ein Schnitt zeigt Figur 7c bis 7d.

Wie in Figur 7a dargestellt, besteht das Motorgehäuse 113 bevorzugt aus zwei Kunststoffhalbschalen, die den Motor umschließen. Die beiden Kunststoffhalbschalen sind mittels Schrauben miteinander verbunden.

In den Figuren 7a und 7b sind die unterschiedlichen Bearbeitungsvorrichtungen, die mit dem im Motorgehäuse 113 untergebrachten Elektromotor angetrieben werden können, dargestellt.

Bei der Darstellung des für beide Reinigungs- und Pflegegeräte gemeinsamen Elektromotors im Motorgehäuse 113 gemäß Figur 7a ist lediglich die Getriebeabtriebswelle 160 gezeigt, die im Falle von Figur 7a und dem dargestellten ersten Reinigungs- und Pflegegerät in Form einer Fugenbürste diese durch bevorzugt werkzeugloses Verbinden der Fugenbürste 122 von der Welle 160 direkt angetrieben wird.

Des Weiteren erkennbar ist die Abdeckung 124.1 der Fugenbürste 122, die das Verteilen von Schmutzpartikeln verhindert.

Der Antrieb der Fugenbürste 122 erfolgt, wie zuvor erwähnt, direkt über die Getriebeabtriebswelle 160, so dass die Drehzahl der Fugenbürste der Drehzahl der Getriebeabtriebswelle entspricht. Die Drehzahl liegt im Bereich 800 U/min bis 2000 U/min, bevorzugt bei 1600 U/min und ermöglicht so eine effiziente Beseitigung von Schadpflanzen, Moos und Schmutz aus den Fugen zwischen Steinplatten und Pflastersteinen. Die Übersetzung vom hochdrehenden Elektromotor auf die Drehzahl 800 U/min bis 2000 U/min erfolgt bevorzugt durch ein Planetenradgetriebe.

Die Fugenbürste ist vorliegend im Wesentlichen scheibenförmig ausgestaltet, wobei die Scheibe eine Breite b aufweist. Die Scheibe ist bevorzugt eine Scheibe, die mit Borsten bestückt ist und in den Figuren 8a und 8b detailliert dargestellt ist. Die Breite B der Fugenscheibe entspricht im Wesentlichen der Breite der Fugen und liegt bevorzugt zwischen 1 mm und 20 mm.

Um das handgeführte Gerät sicher auf dem Boden führen zu können, ist auf der der Abtriebswelle 160 des Getriebes gegenüberliegenden Seite bei der Ausgestaltung mit Fugenbürste eine Führungsvorrichtung, insbesondere in Form eines Führungsrades 162, vorgesehen.

Figur 8b zeigt die alternative Bearbeitungsvorrichtung, die mit dem erfindungsgemäßen Reinigungs- und Pflegegerät betrieben werden kann. Dies geschieht einfach durch Aufstecken einer alternativen Bearbeitungsvorrichtung auf die Abtriebswelle 160 des Getriebes, das im Motorgehäuse 113 untergebracht ist. Hierbei handelt es sich um eine Walze in Form einer Walzenbürste 140 mit einer Bürstenoberfläche 172, die vorliegend eine Vielzahl von Borsten 174 umfasst.

Bevorzugt kann das Reinigungs- und Pflegegerät unterschiedliche Walzenbürsten umfassen. Hierbei werden Walzenbürsten mit unterschiedlichen Borstenstärken getauscht. Dies hat den Vorteil, dass je nach Beschaffenheit des zu reinigenden Bodens, beispielsweise eines Fliesen-, Stein-, Marmor-, Betonstein-, Naturstein, Kunststein oder aber eines Holzbodens, die Bürstenoberfläche entsprechend gewählt werden kann.

Die Stärke der Borsten variiert je nach Oberflächenbeschaffenheit von 0,4 mm bis 1 mm, bevorzugt in 0,1 mm-Schritten. Nachfolgend wird eine Tabelle angegeben, aus der hervorgeht, welche Borstenstärke für welche Bodenoberfläche geeignet ist.

Die Reinigungsergebnisse waren für den Fachmann überraschend und nicht vorhersehbar, da der Reinigungserfolg nicht alleine von der Borstenstärke abhängt, sondern auch von der Umdrehungszahl der Walzenoberfläche, die bevorzugt unterhalb der im Stand der Technik üblichen 3000 U/min liegt, bevorzugt zwischen 800 U/min und 2000 U/min, insbesondere bevorzugt bei ungefähr 1600 U/min.

Nachfolgende Reinigungsergebnisse in Tabelle 1 beziehen sich auf Drehzahlen der Walzenbürste im Bereich 1600 U/min.

**Tabelle 1:Reinigungsergebnisse trocken**

| **Borstendurchmesser 0,4 mm** | Grobes Pflaster | Feines Pflaster, Naturstein Beton, Fliesen | Holzdeck profiliert |
|---|---|---|---|
| Oberflächenreinigung | - | - | ++ |
| Eindringtiefe in Zwischenräume | - | + | ++ |
| Verschmieren | - | - | + |
| Rückstände | -- | + | + |
| | | | |

| **Borstendurchmesser 0,5 mm** | Grobes Pflaster | Feines Pflaster, Naturstein Beton, Fliesen | Holzdeck profiliert |
|---|---|---|---|
| Oberflächenreinigung | - | - | - |
| Eindringtiefe in Zwischenräume | - - | + | + + |
| Verschmieren | - - | - - | + |
| Rückstände | - - | - - | - |
| | | | |

| **Borstendurchmesser 0,6 mm** | Grobes Pflaster | Feines Pflaster, Naturstein Beton, Fliesen | Holzdeck profiliert |
|---|---|---|---|
| Oberflächenreinigung | + | + | + + |
| Eindringtiefe in Zwischenräume | + + | + + | + + |
| Verschmieren | -- | - | + |
| Rückstände | + | + | + + |
| | | | |

| **Borstendurchmesser 0,7 mm** | Grobes Pflaster | Feines Pflaster, Naturstein, Beton, Fliesen | Holzdeck profiliert |
|---|---|---|---|
| Oberflächenreinigung | + | + | - |
| Eindringtiefe in Zwischenräume | + + | + + | + + |
| Verschmieren | + | + | + |
| Rückstände | + | + | + |
| | | | |

| **Borstendurchmesser 1,0 mm** | Grobes Pflaster | Feines Pflaster, Naturstein, Beton, Fliesen | Holzdeck profiliert |
|---|---|---|---|
| Oberflächenreinigung | + | + | + + |
| Eindringtiefe in Zwischenräume | + + | + + | - - |
| Verschmieren | + + | + + | - - * |
| Rückstände | + + | + + | + |

| | | | |
|---|---|---|---|
| * abrasiv auf Holzoberflächen + gutes Reinigungsergebnis ++ sehr gutes Reinigungsergebnis - schlechtes Reinigungsergebnis - - sehr schlechtes Reinigungsergebnis - | | | |

In Figur 7b deutlich zu erkennen ist die Zahnriemenvorrichtung 180, die vorliegend als Zahnriemengetriebe ausgebildet ist und die Umdrehungen der Getriebeabtriebswelle 160 auf den Lagerzapfen 190 übersetzt, auf die die Walzenbürste aufgesteckt wird und die dazu dient, die Walzenbürste parallel zur Motorwelle anzutreiben.

Des Weiteren zu erkennen in Figur 7b ist die Lagereinrichtung 1000, die dazu dient, zwischen dem Lagerzapfen 190, 191 die Walzenbürste 140 mittig zum Elektromotor 113 formschlüssig zu zentrieren.

Die Führungseinrichtung bzw. Lagereinrichtung 1000 ist gegenüberliegend der Zahnriemenvorrichtung 180 angeordnet. Wie aus Figur 7b deutlich zu erkennen ist, ist die Breite BÜ der Zahnriemenvorrichtung deutlich größer als die Breite BF der Führungs- bzw. Lagervorrichtung 1000, ausgebildet, die die Welle 190, auf die die Walzenbürste 140 aufgebracht wird, aufnimmt. Das heißt, dass die Lagereinrichtung 1000 wesentlich schmäler als die Zahnriemenvorrichtung 180 ist. Dies ermöglicht es, falls mit der Walze in Form einer Walzenbürste 140 eine Reinigung vorgenommen wird, dass die Walzenbürste 140 in randnahe Bereiche verbracht werden kann und somit tendenziell eine sauberere Reinigung im randnahen Bereich erfolgt.

Bei der Ausgestaltung gemäß Figur 7b wird die Walzenbürste 140 auf einen Sechskant-Wellenzapfen 190 aufgebracht und von diesem angetrieben. Dies ist eine Version der Ausgestaltung einer Welle zum Antrieb der Walzenbürste 140. Alternativ zu dieser Ankoppelung kann eine durchgehende Welle eingesetzt werden.

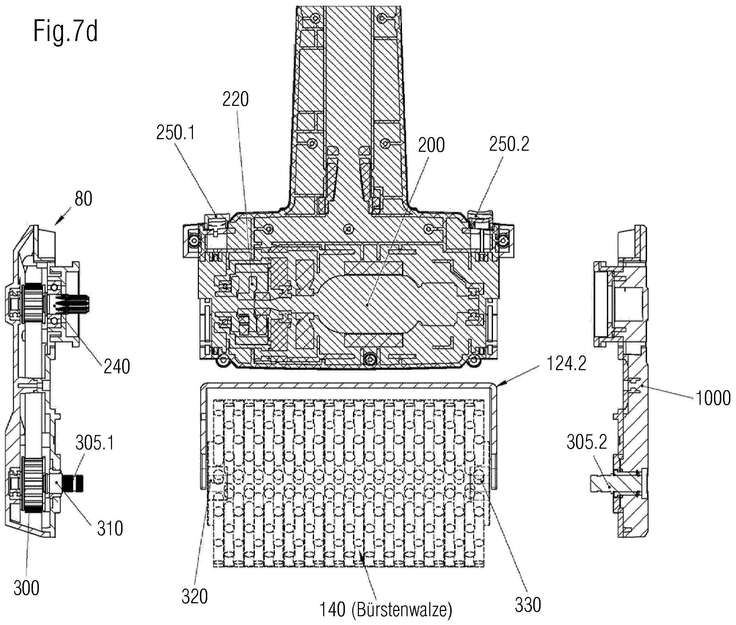

In den Figuren 7c und 7d sind wiederum Ansichten, wie in den Figuren 7a und 7b gezeigt, jedoch handelt es sich hierbei um geschnittene Ansichten von unten, aus denen beispielsweise die in das Gehäuse 113 eingebrachten Bauteile erkennbar sind. Gleiche Bezeichnungen wie in den Figuren 7a und 7b tragen in den Figuren 7c und 7d dieselben Bezugsziffern.

Figur 7c ist analog zu Figur 7a in geschnittener Ansicht gezeigt. Deutlich zu erkennen ist der im Gehäuse untergebrachte Elektromotor 200, dessen Antriebswelle 210 auf ein Getriebe 220 in Form eines Planetengetriebes wirkt, so dass am Getriebeausgang 230 mit Getriebeabtriebswelle eine untersetzte Drehzahl von 800 bis 2000 U/min, bevorzugt ungefähr 1600 U/min zur Verfügung gestellt wird, die durch Einklicken der Zahnwelle 240 des Antriebes für Fugenbürste 122 die Kraft vom Elektromotor über das Getriebe auf die Fugenbürste 122 überträgt. Um die Fugenbürste 122 sicher mit der Abtriebswelle des Getriebes zu verbinden, sind Schieber 250.1, 250.2 als Verriegelungs- und Entriegelungsvorrichtung zur Arretierung vorgesehen, mit denen man das Bearbeitungsgerät verrasten und entrasten kann. Deutlich zu erkennen auch das auf der gegenüberliegenden Seite der Fugenbürste 122 angeordnete Führungsrad 162.

In Figur 7d ist wiederum das gleiche Bauteil wie in Figur 7b gezeigt, das für beide Reinigungsgeräte übereinstimmt, hier das Gehäuse 113 mit Stiel in aufgeschnittener Ansicht, so dass Elektromotor 200 und Getriebe 220 sichtbar sind. Gleiche Bauteile wie in Figur 7c sind mit den gleichen Bezugsziffern versehen.

Deutlich zu erkennen im Schnitt in Figur 7d die Führungseinrichtung 1000 und die Zahnriemenvorrichtung 180. Die Zahnriemenvorrichtung 180 weist einen Zahnriemen 300 mit einer Zahnwelle 310 auf. Die Eingangswelle in die Zahnriemenvorrichtung 80, die direkt an der Getriebeausgangswelle bzw. Getriebeabtriebswelle 60 angebracht wird, ist, wie in Figur 2c, mit 240 bezeichnet. Die Zahnwelle 310 ist mit einem als Sechskant ausgebildeten Wellenstumpf 305.1 versehen, der die Walzenbürste über einen Innensechskant 320 antreibt. Gegenüberliegend zum Wellenstumpf 305.1 ist ein weiterer als Sechskant ausgeführter Wellenstumpf 305.2 mit einem passenden Innensechskant 330 angeordnet. Die Wellenstümpfe 305.1, 305.2 führen dann die Walzenbürste formschlüssig.

In Figur 8a ist eine Seitenansicht einer Fugenbürste 122 dargestellt. Die Fugenbürste 122 umfasst einen Kern 500, der bevorzugt aus Metall oder Kunststoff ausgebildet ist. In diesen Kern 500 greift die Welle 240 aus Fig. 7c ein und verrastet an fünf oder mehr Zähnen 510.1, 510.2, 510.3, 510.4, 510.5 formschlüssig.

Die Fugenbürste 122 umfasst Borsten 600, die durch einen Ring 500, gehalten von zwei Blechscheiben 501, 502 miteinander verpresst sind. Die Borsten 600 und ihre Anordnung auf dem innenliegenden Bauteil 500, 501, 502 sind detailliert in Figur 8b gezeigt. Der Durchmesser der Fugenbürste beträgt vorliegend 110 mm, die Breite B ist 12 mm. Der Durchmesser der Fugenbürste kann im Bereich 50 mm bis 150 mm liegen, bevorzugt ist er bei 110 mm. Die Borsten sind wahlweise aus Nylon mit einem Durchmesser von 0,5 - 1,5 mm oder Stahldraht verzinkt, vermessingt oder Edelstahldraht oder Messingdraht mit einem Durchmesser von 0,2 - 0,8 mm, bevorzugt von 0,35 mm. Bei Versuchen hat sich gezeigt, dass Nylonborsten bei Betonsteinen und Natursteinoberflächen einen erhöhten Abrieb aufweisen, wodurch die Lebensdauer der Bürste deutlich eingeschränkt ist gegenüber Stahldraht. Des Weiteren haben Versuche ergeben, dass vermessingter Stahldraht eine höhere Lebensdauer aufweist als Edelstahl. Weiterhin können zu dünne Borsten im Betrieb leicht abknicken, wodurch die Bürstenbreite vergrößert wird und die Fugen nicht mehr tief genug gereinigt werden können. Andererseits führen dicke Borsten aber zu einer Beschädigung der zu reinigenden Oberfläche.

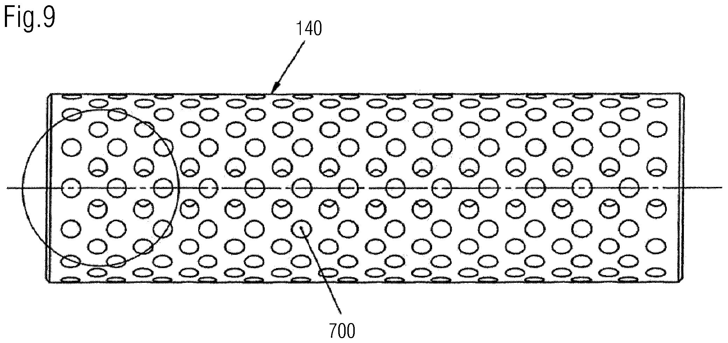

Figur 9 zeigt eine Draufsicht auf eine Walzenbürste 140 ohne Borsten. Die Walzenbürste umfasst Löcher 700, in die Borstenbündel mit Borsten unterschiedlicher Stärke von 0,4 mm bis 1 mm eingestopft werden, ergebend Walzenbürsten mit unterschiedlichen Walzenoberflächen. Die Breite der mit Borsten versehenen Walzenoberfläche variiert von 20 bis 400 mm, bevorzugt 120 bis 180 mm. Auch vorstellbar sind Walzenbürsten mit einer Breite von 300 mm. Selbstverständlich ist es möglich, die Löcher 700 der Walzenbürste 40 nicht vollständig mit Borsten zu belegen. So ist es möglich, eine unsymmetrische

Walzenoberfläche zu erhalten. Auch ist es möglich, dass die Borstenlänge der einzelnen Borstenbüschel über die Walzenoberfläche variiert.

Mit der Erfindung wird erstmals ein Reinigungs- und Pflegegerät angegeben, das die Reinigung sowohl trocken als auch nass und die Bearbeitung von unterschiedlichsten Böden oder Bodenoberflächen mit ein und demselben Reinigungs- und Pflegegerät durch einfachen Tausch von Bodenbearbeitungsvorrichtungen zulässt. Des Weiteren können durch Tausch der Walzenbürsten unterschiedlichste Oberflächen gereinigt und gepflegt werden.

## Patentansprüche

1. Handgeführtes Reinigungs- und Pflegegerät, insbesondere für Bodenbeläge, bevorzugt Fliesenboden- oder Holzbodenbeläge, mit einem Stiel (112) zur Handführung, insbesondere einem in der Länge verstellbaren Stiel (112), einem Motorgehäuse (113), das wenigstens einen Elektromotor und wenigstens ein Getriebe aufnimmt und mit wenigstens einer vom Elektromotor angetriebenen Antriebswelle, die auf das wenigstens eine Getriebe mit einer Getriebeausgangswelle (160) wirkt, wobei das Reinigungs- und Pflegegerät (111) wenigstens zwei Bearbeitungsvorrichtungen, eine erste Bearbeitungsvorrichtung und eine zweite Bearbeitungsvorrichtung, umfasst, wobei erste und zweite Bearbeitungsvorrichtung derart ausgebildet sind, dass sie gegeneinander tauschbar, bevorzugt werkzeuglos tauschbar und von der Getriebeausgangswelle (160) antreibbar sind, wobei die erste Bearbeitungsvorrichtung eine Scheibe in Form einer Fugenbürste ist, sowie eine Führungseinrichtung umfasst und die erste Bearbeitungsvorrichtung auf der Motorachse außermittig zum Stiel (112) positioniert ist und die zweite Bearbeitungsvorrichtung eine Walze in Form einer Walzenbürste (140) mit einer Walzenoberfläche ist, wobei die Walzenbürste parallel zum Motor und symmetrisch zum Stiel angeordnet ist, wobei die Führungseinrichtung ein Laufrad auf der gegenüberliegenden Seite der Fugenbürste umfasst, das für eine stabile Lage der Achse sorgt.

2. Handgeführtes Reinigungs- und Pflegegerät (111) nach Anspruch 1 , **dadurch gekennzeichnet, dass**
die Walzenbürste (140) einen rotationssymmetrischen Zylinder, der eine Zylinderoberfläche aufweist, umfasst, wobei auf der Zylinderoberfläche wenigstens eine erste Vielzahl erster Borstenbündel mit ersten Borsten und eine zweite Vielzahl zweiter Borstenbündel mit zweiten Borsten angeordnet sind und die ersten Borstenbündel unterschiedlich zu den zweiten Borstenbündeln sind.

3. Handgeführtes Reinigungs- und Pflegegerät (111) gemäß Anspruch 2, **dadurch gekennzeichnet, dass**
die ersten und zweiten Borsten (174) einen ersten und einen zweiten Durchmesser und/oder eine erste Länge und eine zweite Länge aufweisen und der erste Durchmesser und/oder die erste Länge unterschiedlich zum zweiten Durchmesser und/oder der zweiten Länge ist.

4. Handgeführtes Reinigungs- und Pflegegerät (111) nach Anspruch 3, **dadurch gekennzeichnet, dass**
die erste Länge im Bereich 50 % bis 98 %, bevorzugt 50% bis 90% der zweiten Länge liegt.

5. Handgeführtes Reinigungs- und Pflegegerät (111) nach einem der Ansprüche 2 bis 4,
**dadurch gekennzeichnet, dass**
die ersten und zweiten Borstenbündel im Wechsel nebeneinander über der Walzenoberfläche (172) verteilt, insbesondere versetzt als Diagonalen über die Walzoberfläche (172) angeordnet sind.

6. Handgeführtes Reinigungs- und Pflegegerät (111) nach einem der Ansprüche 2 bis 5,
**dadurch gekennzeichnet, dass**
die ersten und zweiten Borsten (174) erste und zweite Durchmesser aufweisen und die ersten und/oder zweiten Durchmesser im Bereich 0,2 bis 1 mm, bevorzugt 0,4 mm bis 0,8 mm liegen.

7. Handgeführtes Reinigungs- und Pflegegerät (111) nach einem der Ansprüche 1 bis 6,
**dadurch gekennzeichnet, dass**
die Walzenbürste (140) wenigstens einen Bürstenaufsatz mit bevorzugt außenwinklig angestellten Borstenbündeln umfasst.

8. Handgeführtes Reinigungs- und Pflegegerät (111) nach einem der Ansprüche 2 bis 7,
**dadurch gekennzeichnet, dass**
der Zylinder der Walzenbürste (140) eine Vielzahl von Segmenten (100.1, 100.2, 100.3, 100.4, 100.5) umfasst, bevorzugt mit unterschiedlichen Borstenbündeln in unterschiedlichen Segmenten (100.1, 100.2, 100.3, 100.4, 100.5).

9. Handgeführtes Reinigungs- und Pflegegerät (111) nach einem der Ansprüche 2 bis 8,
**dadurch gekennzeichnet, dass**
das erste Material der ersten Borstenbündel und das zweite Material der zweiten Borstenbündel eines der nachfolgenden Materialien ist:
- ein Kunststoffmaterial, insbesondere Polyamid oder Polypropylen;
- ein Metallmaterial, insbesondere ein Stahldraht oder ein Edelstahldraht.

10. Handgeführtes Reinigungs- und Pflegegerät (111) nach einem der Ansprüche 1 bis 9,
**dadurch gekennzeichnet, dass**
die Fugenbürste (122) eine Drahtscheibe ist.

11. Handgeführtes Reinigungs- und Pflegegerät (111) nach einem der Ansprüche 1 bis 12,
**dadurch gekennzeichnet, dass**
das handgeführte Reinigungs- und Pflegegerät (111) zur Verbindung der Walzenbürste mit der Getriebeabtriebswelle eine Vorrichtung umfassend einen Zahnriemenantrieb (180) umfasst.

12. Handgeführtes Reinigungs- und Pflegegerät (111) nach Anspruch 11, **dadurch gekennzeichnet, dass**
die zweite Bearbeitungsvorrichtung eine Lagereinrichtung für die Walzenbürste gegenüberliegend zur Vorrichtung umfassend den Zahnriemenantrieb (180) umfasst.

13. Handgeführtes Reinigungs- und Pflegegerät (111) nach einem der Ansprüche 1 bis 12,
**dadurch gekennzeichnet, dass**
das Reinigungs- und Pflegegerät (111) bevorzugt im Bereich des Motorgehäuses (113) Verriegelungs- und Entriegelungsvorrichtungen umfasst, bevorzugt derart, dass ein werkzeugloser Tausch von erster und/oder zweiter Bearbeitungsvorrichtung ermöglicht wird.

## Claims

1. Hand-operated cleaning and care device, in particular for floor coverings, preferably tiled floor or wooden floor coverings, having a handle (112) for hand guidance, in particular a handle (112) adjustable in length, a motor housing (113) which accommodates at least one electric motor and at least one transmission, and having at least one drive shaft driven by the electric motor, which acts on the at least one transmission with a transmission output shaft (160), wherein the cleaning and care device (111) comprises at least two processing devices, a first processing device and a second processing device, wherein the first and second processing devices are designed in such a way that they are interchangeable with one another, preferably interchangeable without tools, and can be driven by the transmission output shaft (160), wherein the first processing device is a disc in the form of a joint brush and comprises a guide device, and the first processing device is positioned on the motor axis eccentrically to the shaft (112) and the second processing device is a roller in the form of a roller brush (140) with a roller surface, wherein the roller brush is arranged parallel to the motor and symmetrically to the shaft, wherein the guide device comprises an running wheel on the opposite side of the joint brush, which ensures a stable position of the shaft.

2. Hand-operated cleaning and care device (111) according to claim 1, **characterized in that** the roller brush (140) comprises a rotationally symmetrical cylinder having a cylinder surface, wherein at least a first plurality of first bristle bundles with first bristles and a second plurality of second bristle bundles with second bristles are arranged on the cylinder surface, and the first bristle bundles are different from the second bristle bundles.

3. Hand-operated cleaning and care device (111) according to claim 2, **characterized in that** the first and second bristles (174) have a first and a second diameter and/or a first length and a second length, and the first diameter and/or the first length is different from the second diameter and/or the second length.

4. Hand-operated cleaning and care device (111) according to claim 3, **characterized in that** the first length is in the range of 50% to98 %, preferably 50% to 90% of the second length.

5. Hand-operated cleaning and care device (111) according to one of claims 2 to 4, **characterized in that** the first and second bristle bundles are arranged alternately next to one another over the roller surface (172), in particular offset as diagonals over the roller surface (172).

6. Hand-operated cleaning and care device (111) according to one of claims 2 to 5, **characterized in that** the first and second bristles (174) have first and second diameters and the first and/or second diameters are in the range of 0.2 to 1 mm, preferably 0.4 mm to 0.8 mm.

7. Hand-operated cleaning and care device (111) according to one of claims 1 to 6, **characterized in that** the roller brush (140) comprises at least one brush attachment with bristle bundles preferably set at an outer angle.

8. Hand-operated cleaning and care device (111) according to one of claims 2 to 7, **characterized in that** the cylinder of the roller brush (140) comprises a plurality of segments (100.1, 100.2, 100.3, 100.4, 100.5), preferably with different bristle bundles in different segments (100.1, 100.2, 100.3, 100.4, 100.5).

9. Hand-operated cleaning and care device (111) according to one of claims 2 to 8, **characterized in that** the first material of the first bristle bundle and the second material of the second bristle bundle is one of the following materials:
- a plastic material, in particular polyamide or polypropylene;
- a metal material, in particular a steel wire or a stainless steel wire.

10. Hand-operated cleaning and care device (111) according to one of claims 1 to 9, **characterized in that** the joint brush (122) is a wire disc.

11. Hand-operated cleaning and care device (111) according to one of claims 1 to 12, **characterized in that** the hand-operated cleaning and care device (111) for connecting the roller brush to the transmission output shaft has a device comprising a toothed belt drive (180).

12. Hand-operated cleaning and care device (111) according to claim 11, **characterized in that** the second processing device comprises a bearing device for the roller brush opposite the device comprising the toothed belt drive (180).

13. Hand-operated cleaning and care device (111) according to one of claims 1 to 12, **characterized in that** the cleaning and care device (111) comprises locking and unlocking devices, preferably in the region of the motor housing (113), preferably in such a way that a tool-free exchange of first and/or second processing device is made possible.

## Revendications

1. Appareil de nettoyage et d'entretien guidé à la main, en particulier pour des revêtements de sol, de préférence des revêtements de sol carrelés ou en bois, avec un manche (112) pour le guidage à la main, en particulier un manche (112) de longueur réglable, avec un boîtier de moteur (113) qui contient au moins un moteur électrique et au moins un engrenage, et avec au moins un arbre d'entraînement entraîné par le moteur électrique qui agit sur l'au moins un engrenage avec un arbre de sortie d'engrenage (160) l'appareil de nettoyage et d'entretien (111) comportant au moins deux dispositifs de traitement, un premier dispositif de traitement et un deuxième dispositif de traitement, le premier dispositif de traitement et le deuxième étant conformés de telle manière qu'ils puissent être échangés l'un contre l'autre, de préférence échangés sans outil, et puissent être entraînés par l'arbre de sortie d'engrenage (160), dans lequel le premier dispositif de traitement est un disque prenant la forme d'une brosse à joints et comprend une installation de guidage et le premier dispositif de traitement est positionné sur l'axe du moteur de façon excentrée par rapport au manche (112) et le deuxième dispositif de traitement est un rouleau prenant la forme d'une brosse en rouleau (140) avec une surface de rouleau, laquelle brosse en rouleau est disposée parallèlement au moteur et de façon symétrique par rapport au manche, l'installation de guidage comprenant une roulette sur le côté qui lui fait face de la brosse à joints, qui assure une position stable de l'axe.

2. Appareil de nettoyage et d'entretien guidé à la main (111) selon la revendication 1, **caractérisé en ce que** la brosse en rouleau (140) comprend un cylindre symétrique sur l'axe de rotation qui présente une surface de cylindre, un premier grand nombre de premières touffes de soies avec des premières soies et un deuxième grand nombre de deuxièmes touffes de soies avec des deuxièmes soies étant disposés sur la surface de cylindre et les premières touffes de soies étant différentes des deuxièmes touffes de soies.

3. Appareil de nettoyage et d'entretien guidé à la main (111) selon la revendication 2, **caractérisé en ce que** les premières et deuxièmes soies (174) présentent un premier diamètre et un deuxième et/ou une première longueur et une deuxième longueur et le premier diamètre et/ou la première longueur sont différents du deuxième diamètre et/ou de la deuxième longueur.

4. Appareil de nettoyage et d'entretien guidé à la main (111) selon la revendication 3, **caractérisé en ce que** la première longueur est comprise entre 50 % et 98 %, de préférence entre 50 % et 90 % de la deuxième longueur.

5. Appareil de nettoyage et d'entretien guidé à la main (111) selon l'une des revendications 2 à 4, **caractérisé en ce que** les premières et deuxièmes touffes de soies sont réparties en alternance les unes à côté des autres sur la surface de cylindre (172), en particulier disposées avec un décalage sur des diagonales sur la surface de cylindre (172).

6. Appareil de nettoyage et d'entretien guidé à la main (111) selon l'une des revendications 2 à 5, **caractérisé en ce que** les premières et deuxièmes soies (174) présentent un premier diamètre et un deuxième et le premier diamètre et/ou le deuxième sont compris entre 0,2 et 1 mm, de préférence entre 0,4 mm et 0,8 mm.

7. Appareil de nettoyage et d'entretien guidé à la main (111) selon l'une des revendications 1 à 6, **caractérisé en ce que** la brosse en rouleau (140) comprend au moins un embout de brosse avec des touffes de soies orientées de préférence sous un angle vers l'extérieur.

8. Appareil de nettoyage et d'entretien guidé à la main (111) selon l'une des revendications 2 à 7, **caractérisé en ce que** le cylindre de la brosse en rouleau (140) comprend un grand nombre de segments (100.1, 100.2, 100.3, 100.4, 100.5), de préférence avec des touffes de soies différentes dans différents segments (100.1, 100.2, 100.3, 100.4, 100.5).

9. Appareil de nettoyage et d'entretien guidé à la main (111) selon l'une des revendications 2 à 8, **caractérisé en ce que** le premier matériau des premières touffes de soies et le deuxième matériau des deuxièmes touffes de soies sont l'un des matériaux suivants :
- un matériau synthétique, en particulier du polyamide ou du polypropylène ;
- un matériau métallique, en particulier du fil d'acier ou du fil d'acier inoxydable.

10. Appareil de nettoyage et d'entretien guidé à la main (111) selon l'une des revendications 1 à 9, **caractérisé en ce que** la brosse à joints (122) est un disque de fils métalliques.

11. Appareil de nettoyage et d'entretien guidé à la main (111) selon l'une des revendications 1 à 12, **caractérisé en ce que** l'appareil de nettoyage et d'entretien guidé à la main (111) comprend, pour l'assemblage de la brosse en rouleau avec l'arbre de sortie d'engrenage, un dispositif comprenant un entraînement à courroie dentée (180).

12. Appareil de nettoyage et d'entretien guidé à la main (111) selon la revendication 11,
**caractérisé en ce que** le deuxième dispositif de traitement comprend une installation de palier pour la brosse en rouleau placée en face du dispositif comprenant la courroie dentée (180).

13. Appareil de nettoyage et d'entretien guidé à la main (111) selon l'une des revendications 1 à 12, **caractérisé en ce que** l'appareil de nettoyage et d'entretien (111) comprend de préférence des dispositifs de verrouillage et de déverrouillage au niveau du boîtier de moteur (113), de préférence tels qu'ils permettent un échange sans outil du premier dispositif de traitement et/ou du deuxième.
